# EUROPÄISCHE PATENTSCHRIFT

(11) **EP 0 842 951 B1**
(45) Veröffentlichungstag und Bekanntmachung des Hinweises auf die Patenterteilung: **13.06.2001**
(21) Anmeldenummer: 97119144.0
(22) Anmeldetag: 03.11.1997
(51) Int. Cl.: C08F 2/18, C08F 12/08

(54) **Verfahren zur Herstellung mikroverkapselter Polymerisate**
Process for the preparation of microencapsulated polymers
Procédé pour la préparation de polymères microencapsulées

(30) Priorität: 15.11.1996 DE 19647291
(43) Veröffentlichungstag der Anmeldung: 20.05.1998
(73) Patentinhaber: BAYER AG, 51368 Leverkusen (DE)
(72) Erfinder: Halle, Olaf, Dr., 51061 Köln (DE); Podszun, Wolfgang, Dr., 51061 Köln (DE); Bloodworth, Robert, Dr., 51061 Köln (DE); Strüver, Werner, Dr., 51375 Leverkusen (DE); Ingendoh, Axel, Dr., 51519 Odenthal (DE)

(56) Entgegenhaltungen:
- EP-A- 0 046 535
- JP-A- 4 239 001
- DATABASE WPI Derwent Publications Ltd., London, GB; AN 92-335395 XP002057458 & JP 04 239 001 A (HITACHI CHEM CO LTD) , 26.August 1992

## Beschreibung

Die Erfindung betrifft ein Verfahren zur Herstellung mikroverkapselter Polymerisate durch Polymerisation in Mikrokapseln eingeschlossener Monomerer.

In jüngerer Zeit haben Ionenaustauscher mit möglichst einheitlicher Teilchengröße (im folgenden "monodispers" genannt) zunehmend an Bedeutung gewonnen, weil bei vielen Anwendungen aufgrund der günstigeren hydrodynamischen Eigenschaften eines Austauscherbettes aus monodispersen Ionenaustauschern wirtschaftliche Vorteile erzielt werden können. Monodisperse Ionenaustauscher können durch Funktionalisieren von monodispersen Perlpolymerisaten erhalten werden. Eine der Möglichkeiten, monodisperse Perlpolymerisate herzustellen, besteht darin, durch Verdüsung von Monomer in eine kontinuierliche Phase monodisperse Monomertröpfchen zu erzeugen und diese dann durch Polymerisation auszuhärten. Die Ausbildung einheitlicher Tröpfchengrößen kann durch Schwingungsanregung unterstützt werden; so wird in der EP-PS 51 210 ein Verfahren zur Herstellung kugelförmiger Monomertröpfchen mit einheitlicher Teilchengröße durch Schwingungsanregung eines laminaren Monomerstroms beschrieben. Soll die Monodispersität der Monomertröpfchen bei der Polymerisation erhalten bleiben, so muß die Koaleszenz sowie die Neubildung von Tröpfchen ausgeschlossen werden. Eine besonders wirksame Methode zur Verhinderung von Koaleszenz und Neubildung von Tröpfchen besteht in der Mikroverkapselung der Tröpfchen gemäß EP-PS 46 535.

In JP-A-4 239 001 wird die Herstellung von Polymerteilchen beschrieben, wobei der wässrigen Phase Polymerisationsinhibitor hinzugefügt wird, wodurch diese eine glatte Oberfläche erhalten. JP-A-4 239 001 beschreibt jedoch nicht den Einsatz von Polymerisationsinhibitor bei mikroverkapselten Monomeren.

Es hat sich gezeigt, daß die Polymerisation von mikroverkapselten Monomertröpfchen nicht immer zu Perlpolymerisaten mit glatten Oberflächen führt: Es können Perlpolymerisate mit rauhen und/oder belegten Oberflächen entstehen. Für viele Anwendungen stellt eine Oberflächenrauhigkeit oder ein Oberflächenbelag keinen Nachteil dar, zumal ein Oberflächenbelag durch Nachbehandlung entfernt werden kann bzw. bei einer Funktionalisierung des Perlpolymerisats zum Ionenaustauscher mit der Kapselwand entfernt wird. Für einige Anwendungen werden jedoch Perlpolymerisate mit glatten Oberflächen gewünscht, so z.B. für den Einsatz der Perlpolymerisate als Saat in einem sogenannten seed/feed-Verfahren. Unter "seed/feed-Verfahren" versteht man ein Verfahren, wonach ein Polymerisat in copolymerisierbarem Monomer gequollen und dieses Monomer polymerisiert wird, wobei dann vergrößerte Polymerisatteilchen entstehen.

Es wurde nun gefunden, daß bei der Polymerisation in wäßriger Phase suspendierter mikroverkapselter Monomertröpfchen kugelförmige Polymerisate mit verbesserter Oberflächenqualität (d.h. mit glatten Oberflächen ohne Belag) entstehen, wenn das Monomer und/oder die wäßrige Phase mindestens einen Polymerisationsinhibitor enthalten.

Gegenstand der Erfindung ist also ein Verfahren zur Herstellung mikroverkapselter Polymerisate durch Polymerisation von Monomertröpfchen, die in (in wäßriger Phase suspendierten) Mikrokapseln enthalten sind, dadurch gekennzeichnet, daß die wäßrige Phase mindestens einen Polymerisationsinhibitor enthält. Die Monomertröpfchen können neben dem Monomer auch Vernetzer enthalten.

Die erfindungsgemäß hergestellten mikroverkapselten Polymerisate können direkt oder über die Zwischenstufe durch ein Saat/Zulauf-Verfahren vergrößerter Polymerisatteilchen durch Funktionalisierung in Ionenaustauscher überführt werden.

Unter "Monomer" werden Verbindungen mit 1 polymerisierbaren C=C-Doppelbindung verstanden, wie z.B. Styrol, Vinyltoluol, Ethylstyrol, α-Methylstyrol, Chlorstyrol, Chlormethylstyrol, Acrylsäure, Methacrylsäure, Acrylsäureester, Methacrylsäureester, Acrylnitril, Methacrylnitril, Acrylamid, Methacrylamid und Mischungen dieser Verbindungen.

Bevorzugt sind Styrol sowie Mischungen aus Styrol und den vorgenannten Monomeren.

Als Vernetzer können Verbindungen mit mindestens 2, vorzugsweise 2 oder 3 polymerisierbaren C=C-Doppelbindungen verwendet werden. Bevorzugte Vernetzer umfassen Divinylbenzol, Divinyltoluol, Trivinylbenzol, Divinylnaphthalin, Trivinylnaphthalin, Diethylenglykoldivinylether, 1,7-Octadien, 1,5-Hexadien, Ethylenglykoldimethacrylat, Triethylenglykoldimethacrylat, Trimethylolpropantrimethacrylat, Allylmethacrylat und Methylen-N,N'-bisacrylamid. Die Art der Vernetzer kann im Hinblick auf die spätere Verwendung des Polymerisats ausgewählt werden. So sind beispielsweise Acrylat- bzw. Methacrylat-Vernetzer wenig geeignet, wenn aus dem Polymerisat ein Kationenaustauscher durch Sulfonierung hergestellt werden soll, da die Esterbindung unter den Sulfonierungsbedingungen gespalten wird. Divinylbenzol ist in vielen Fällen, insbesondere auch zur Herstellung stark saurer Kationenaustauscher, geeignet. Für die meisten Anwendungen sind kommerzielle Divinylbenzolqualitäten, die neben den Isomeren des Divinylbenzols auch Ethylvinylbenzol enthalten, ausreichend. Die Vernetzer werden im allgemeinen in Mengen von 0,05-10, vorzugsweise 0,1-5, besonders bevorzugt 0,1-1 Gew.-%, bezogen auf die Summe von Monomer und Vernetzer, eingesetzt. Die Monomeren sollen in der wäßrigen Phase weitgehend unlöslich sein. In Wasser teilweise lösliche Monomere wie Acrylsäure, Methacrylsäure und Acrylnitril werden daher vorzugsweise im Gemisch mit wasserunlöslichen Monomeren verwendet. Es ist auch möglich, die Löslichkeit der Monomeren in der wäßrigen Phase durch Salzzusatz zu erniedrigen.

Für die Mikroverkapselung der Monomertröpfchen kommen die für diesen Einsatzzweck bekannten Materialien in Frage, insbesondere Polyester, natürliche und synthetische Polyamide, Polyurethane, Polyharnstoffe. Als natürliches Polyamid ist Gelatine besonders gut geeignet. Diese kommt insbesondere als Koazervat und Komplexkoazervat zur Anwendung. Unter gelatinehaltigen Komplexkoazervaten im Sinne der Erfindung werden vor allem Kombinationen von Gelatine und synthetischen Polyelektrolyten verstanden. Geeignete synthetische Polyelektrolyte sind Copolymerisate mit eingebauten Einheiten von z.B. Maleinsäure, Acrylsäure, Methacrylsäure, Acrylamid und Methacrylamid. Gelatinehaltige Kapselwände können mit üblichen Hilfsmitteln, wie z.B. Formaldehyd oder Glutardialdehyd, gehärtet werden. Gelatine-haltige Kapselmaterialien sind im Sinne der Erfindung bevorzugt.

Die Verkapselung von Monomertröpfchen mit Gelatine, gelatinehaltigen Koazervaten und gelatinehaltigen Komplexkoazervaten wird z.B. in der EP-PS 46 535 eingehend beschrieben. Die Methoden der Verkapselung mit synthetischen Polymeren sind an sich bekannt. Hierfür gut geeignet ist beispielsweise die Phasengrenzflächenkondensation, bei der eine im Monomertröpfchen gelöste Reaktivkomponente (z.B. ein Isocyanat oder ein Säurechlorid) mit einer zweiten, in der wäßrigen Phase gelösten Reaktivkomponente (z.B. einem Amin), zur Reaktion gebracht wird.

Die zu verkapselnden Monomeren enthalten neben Vernetzer auch Initiatoren zur Auslösung der Polymerisation. Für das erfindungsgemäße Verfahren geeignete Initiatoren sind z.B. Peroxyverbindungen wie Dibenzoylperoxid, Dilaurylperoxid, Bis-(p-chlorbenzoylperoxid), Dicyclohexylperoxydicarbonat, tert.-Butylperoctoat, 2,5-Bis-(2-ethylhexanoylperoxy)-2,5-dimethylhexan und tert.-Amylperoxy-1-ethylhexan, desweiteren Azoverbindungen wie 2,2'-Azobis-(isobutyronitril) und 2,2'-Azobis-(2-methylisobutyronitril). Die Initiatoren werden im allgemeinen in Mengen von 0,05 bis 2,5, vorzugsweise 0,1 bis 1,5 Gew.-%, bezogen auf die Summe Monomer + Vernetzer, angewendet.

Die zu verkapselnden Monomeren können auch sogenannte Porogene enthalten, die im Polymerisat eine makroporöse Struktur erzeugen. Hierfür sind organische Lösungsmittel geeignet, die das gebildete Polymerisat schlecht lösen bzw. quellen. Beispielhaft seien genannt Hexan, Octan, Isooctan, Isododecan, Methylethylketon und Octanol.

Die in den Kapseln enthaltenen Monomeren können auch bis zu 30 Gew.-% vernetztes oder unvernetztes Polymer, bezogen auf verkapseltes Material, enthalten. Bevorzugte Polymere sind solche der vorgenannten Monomeren, besonders bevorzugt solche des Styrols.

Die mittlere Teilchengröße der verkapselten Monomertröpfchen beträgt vorzugsweise 10 bis 1.000, insbesondere 100 bis 1.000 µm. Das erfindungsgemäße Verfahren ist zur Herstellung monodisperser Polymerisate, insbesondere solcher, die in der EP-PS 46 535 beschrieben sind, geeignet.

Polymerisationsinhibitoren im Sinne der Erfindung sind Stoffe, die die radikalische Polymerisation von Verbindungen mit polymerisierbaren C=C-Doppelbindungen verlangsamen oder ganz unterdrücken.

Die erfindungsgemäß zu verwendenden Polymerisationsinhibitoren können anorganische oder organische Stoffe sein. Bevorzugte anorganische Inhibitoren umfassen Hydrazin, Hydroxylamin und Nitroverbindungen wie das Fremy'sche Salz (Kaliumnitrosodisulfonat); Nitrite wie Natriumnitrit und Kaliumnitrit, Salze der phosphorigen Säure wie Natriumhydrogenphosphit, schwefelhaltige Verbindungen wie Natriumdithionit, Natriumthiosulfat, Natriumsulfit, Natriumbisulfit, Natriumrhodanid, Ammoniumrhodanid und Peroxyverbindungen wie Wasserstoffperoxid, Natriumperborat oder Natriumpercarbonat.

Bevorzugte organische Inhibitoren umfassen Hydroxyaromaten wie Hydrochinon, Hydrochinonmonomethylether, Resorcin, Brenzkatechin, tert.-Butylbrenzkatechin, Pyrogallol, p-Nitrosophenol und Kondensationsprodukten aus Phenolen mit Aldehyden, Stickstoff-haltige Verbindungen wie Hydroxylaminderivate, wie z.B. N,N-Diethylhydroxylamin, N-Isopropylhydroxyamin sowie sulfonierte oder carboylierte N-Alkylhydroxylamin- oder N,N-Dialkylhydroxyaminderivate, Hydrazinderivate wie z.B. N,N-Hydrazinodiessigsäure; ferner auch Nitrosoverbindungen wie z.B. N-Nitrosophenylhydroxylamin, N-Nitrosophenylhydroxylamin-Ammoniumsalz oder N-Nitrosophenylhydroxylamin-Aluminiumsalz, ungesättigte Lactone wie Ascorbinsäure, Natriumascorbat, Isoascorbinsäure, Natriumisoascorbat, Hydroxyketone wie z.B. Dihydroxyaceton und schwefelhaltige Verbindungen wie z.B. Natriumisopropylxanthogenat.

Es hat sich in vielen Fällen als vorteilhaft erwiesen, wenn die erfindungsgemäß zu verwendenden Polymerisationsinhibitoren in der wäßrigen Phase löslich sind. "Löslich" bedeutet in diesem Zusammenhang, daß sich mindestens 1000 ppm bei 70°C in der wäßrigen Phase rückstandlos auflösen lassen. Durch geeignete Wahl der Bedingungen kann man dies oft beeinflussen: Beispielsweise kann man die Löslichkeit eines phenolischen Inhibitors durch einen hohen pH-Wert verbessern.

Die Menge des Polymerisationsinhibitors wird so gewählt, daß die Polymerisation von Monomer oder Monomer und Vernetzer außerhalb der Kapselwand verhindert wird. Die notwendige Menge des Polymerisationsinhibitors hängt neben der Menge des verwendeten Polymerisationsinhibitors auch wesentlich von der Inhibitoraktivität und der Löslichkeit des Inhibitors in der wäßrigen Phase ab. Die optimale Menge läßt sich durch einige wenige Versuche leicht ermitteln. Der Inhibitorgehalt handelsüblicher Vernetzer, der im allgemeinen zwischen 0,001 und 0,01 Gew.-%, bezogen auf Vernetzer, beträgt, reicht für die Zwecke der vorliegenden Erfindung nicht aus; er trägt aber - zusammen mit dem zusätzlich zugesetzten Inhibitor - zum gewünschten Effekt bei. Übliche Mengen Polymerisationsinhibitor liegen im Bereich von 10 bis 1.000, vorzugsweise 10 bis 500, insbesondere 10 bis 250 ppm, bezogen auf die Summe (wäßrige Phase + Inhibitor).

Handelsübliche Monomere und Vernetzer können zur Stabilisierung Inhibitoren enthalten. Die Konzentration ist jedoch so gering, daß die für die Erfindung notwendige Konzentration in der wäßriger Phase nicht erreicht wird und der erfindungsgemäße Effekt nicht auftritt.

Die Polymerisation der verkapselten Monomertröpfchen zum kugelförmigen Polymerisat kann zweckmäßigerweise in Anwesenheit eines oder mehrerer Schutzkolloide und gegebenenfalls eines Puffersystems in der wäßrigen Phase erfolgen. Schutzkolloide umfassen natürliche und synthetische wasserlösliche Polymere, wie z.B. Gelatine, Stärke, Polyvinylalkohol, Polyvinylpyrrolidon, Polyacrylsäure, Polymethacrylsäure und Copolymerisate aus (Meth)acrylsäure und (Meth)acrylsäureestern. Sehr gut geeignet sind auch Cellulosederivate, insbesondere Celluloseester und Celluloseether, wie Carboxymethylcellulose, Methylhydroxyethylcellulose, Methylhydroxypropylcellulose und Hydroxyethylcellulose. Bei der Polymerisation von mit Gelatine oder gelatinehaltigen Komplexkoazervaten verkapselten Monomertröpfchen ist als Schutzkolloid Gelatine besonders gut geeignet. Die Einsatzmenge der Schutzkolloide beträgt im allgemeinen 0,025 bis 1,5, vorzugsweise 0,05 bis 0,75 Gew.-%, bezogen auf die wäßrige Phase.

Die Polymerisation kann in Anwesenheit eines Puffersystems durchgeführt werden. Bevorzugt werden Puffersysteme, die den pH-Wert der wäßrigen Phase bei Beginn der Polymerisation auf einen Wert zwischen 14 und 6, vorzugsweise zwischen 12 und 8 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflußt. Besonders gut geeignete Puffersysteme enthalten Phosphate oder Borate. Die Begriffe Phosphat und Borat im Sinne der Erfindung umfassen auch die Kondensationsprodukte der ortho-Formen entsprechender Säuren und Salze. Die Konzentration an Phosphat bzw. Borat in der wäßrigen Phase beträgt 0,5 bis 500 mmol/l, vorzugsweise 2,5 bis 100 mmol/l.

Die Rührgeschwindigkeit bei der Polymerisation ist wenig kritisch und hat im Gegensatz zur herkömmlichen Perlpolymerisation keinen Einfluß auf die Teilchengröße. Es werden niedrige Rührgeschwindigkeiten angewendet, die ausreichen, die Mikrokapseln in Schwebe zu halten und die Abführung der Polymerisationswärme unterstützen.

Das Volumenverhältnis von verkapselten Monomertröpfchen zu wäßriger Phase im allgemeinen beträgt 1:0,75 bis 1:20, vorzugsweise 1:1 bis 1:6.

Die Polymerisationstemperatur richtet sich nach der Zerfallstemperatur des eingesetzten Initiators. Sie beträgt im allgemeinen 50 bis 150°C, vorzugsweise 55 bis 100°C. Die Polymerisation dauert 0,5 bis einige Stunden. Es hat sich bewährt, ein Temperaturprogramm anzuwenden, bei dem die Polymerisation bei niedriger Temperatur, z.B. 60°C, begonnen und mit fortschreitendem Polymerisationsumsatz die Reaktionstemperatur gesteigert wird. Auf diese Weise läßt sich z.B. die Forderung nach sicherem Reaktionsverlauf und hohem Polymerisationsumsatz sehr gut erfüllen. Nach der Polymerisation kann das Polymerisat mit üblichen Mitteln, z.B. durch Filtrieren oder Dekantieren, isoliert und gegebenenfalls nach ein oder mehreren Wäschen getrocknet werden.

Das Material der Kapselwand befindet sich im wesentlichen auf der Oberfläche des Perlpolymerisats. Sofern gewünscht, kann dieses Material durch eine Nachbehandlung entfernt werden. Gelatine und gelatinehaltige Komplexkoazervate lassen sich leicht mit Säuren oder Laugen abwaschen.

In den meisten Fällen ist es jedoch nicht notwendig, das Kapselwandmaterial gesondert abzuwaschen, da es unter den Bedingungen einer Funktionalisierung des Polymerisates zu Ionenaustauschern ohnehin entfernt wird.

Die Prozentangaben der nachfolgenden Beispiele beziehen sich jeweils auf das Gewicht.

### Beispiele

### Beispiel 1 Herstellung eines mikroverkapselten Polymerisats ohne Oberflächenbelag

In einem 4 l Glasreaktor werden 1.580 ml entionisiertes Wasser vorgelegt. Hierin werden 790 g einer mikroverkapselten Mischung aus 0,8 % Divinylbenzol (63 %iges handelsübliches Divinylbenzol-Isomerengemisch in Ethylstyrol), 0,75 % Dibenzoylperoxid und 98,45 % Styrol gegeben, wobei die Mikrokapsel aus einem mit Formaldehyd gehärteten Komplexkoazervat aus Gelatine und einem Acrylamid/Acrylsäure-Copolymerisat besteht. Die mittlere Teilchengröße beträgt 231 µm. Die Mischung wird mit einer Lösung aus 2,4 g Gelatine, 4 g Natriumhydrogenphosphatdodekahydrat und 410 mg N,N-Diethylhydroxylamin (85 %ig) in 80 ml entionisiertem Wasser versetzt, langsam gerührt und unter Rühren durch Temperaturerhöhung auspolymerisiert. Der Ansatz wird über ein 32 um-Sieb gewaschen und getrocknet. Man erhält 760 g eines kugelförmigen, mikroverkapselten Polymerisats mit glatter Oberfläche. Die Polymerisate erscheinen optisch transparent; die mittlere Teilchengröße beträgt 220 µm.

### Beispiel 2 Herstellung eines mikroverkapselten Polymerisat ohne Oberflächenbelag

Versuchsdurchführung analog Beispiel 1, jedoch werden 100 mg N,N-Diethylhydroxylamin (85 %ig) eingesetzt. Man erhält 760 g eines kugelförmigen, mikroverkapselten Polymerisates mit glatter Oberfläche. Die Polymerisate erscheinen optisch transparent; die mittlere Teilchengröße beträgt 220 µm.

### Beispiel 3 Herstellung eines mikroverkapselten Polymerisats ohne Oberflächenbelag

Versuchsdurchführung analog Beispiel 1, jedoch werden 60 mg N,N-Diethylhydroxylamin (85 %ig) eingesetzt. Man erhält 760 g eines kugelförmigen, mikroverkapselten Polymerisates mit glatter Oberfläche. Die Polymerisate erscheinen optisch transparent; die mittlere Teilchengröße beträgt 220 µm.

### Beispiel 4 Herstellung eines mikroverkapselten Polymerisats mit geringem Oberflächenbelag

Versuchsdurchführung analog Beispiel 1, jedoch werden 30 mg N,N-Diethylhydroxylamin (85 %ig) eingesetzt. Man erhält 760 g eines kugelförmigen, mikroverkapselten Polymerisates mit gering belegter Oberfläche. Die Polymerisate erscheinen optisch opak; die mittlere Teilchengröße beträgt 220 µm.

### Beispiel 5 Herstellung eines mikroverkapselten Polymerisats mit starkem Oberflächenbelag (Vergleich)

Versuchsdurchführung analog Beispiel 1, jedoch ohne N,N-Diethylhydroxylamin. Man erhält 760 g eines kugelförmigen, mikroverkapselten Polymerisates mit stark belegter Oberfläche. Die Polymerisate erscheinen optisch weiß; die mittlere Teilchengröße beträgt 220 µm.

### Beispiel 6 Herstellung eines mikroverkapselten Polymerisats ohne Oberflächenbelag

Versuchsdurchführung analog Beispiel 1, jedoch werden 700 mg Hydroxylamin anstelle von N,N-Diethylhydroxylamin (50 %ig) eingesetzt. Man erhält 760 g eines kugelförmigen, mikroverkapselten Polymerisates mit glatter Oberfläche. Die Polymerisate erscheinen optisch transparent; die mittlere Teilchengröße beträgt 220 µm.

### Beispiel 7 Herstellung eines mikroverkapselten Polymerisats ohne Oberflächenbelag

Versuchsdurchführung analog Beispiel 1, jedoch werden 350 mg Resorcin anstelle des N,N-Diethylhydroxylamin eingesetzt. Man erhält 760 g eines kugelförmigen, mikroverkapselten Polymerisates mit glatter Oberfläche. Die Polymerisate erscheinen optisch transparent; die mittlere Teilchengröße beträgt 220 µm.

## Patentansprüche

1. Verfahren zur Herstellung mikroverkapselter Polymerisate durch Polymerisation von Monomertröpfchen, die in im wäßriger Phase suspendierten Mikrokapseln enthalten sind, dadurch gekennzeichnet, dass die wässrige Phase mindestens einen Polymerisationsinhibitor enthält.

2. Verfahren nach Anspruch 1, wonach das Monomertröpfchen Styrol und Vernetzer enthält.

3. Verfahren nach Anspruch 1, wonach der Polymerisationsinhibitor eine anorganische Verbindung ist.

4. Verfahren nach Anspruch 3, wonach der Polymerisationsinhibitor aus der Reihe bestehend aus, Stickstoffverbindungen, Salzen der phosphorigen Säure, schwefelhaltigen Verbindungen und Peroxyverbindungen ausgewählt ist.

5. Verfahren nach Anspruch 1, wonach der Polymerisationsinhibitor eine organische Verbindung ist.

6. Verfahren nach Anspruch 5, wonach der Polymerisationsinhibitor aus der Reihe bestehend aus phenolischen Verbindungen, Stickstoffverbindungen, ungesättigten Lactonen, Hydroxyketonen und schwefelhaltigen Verbindungen ausgewählt ist.

7. Verfahren nach Anspruch 1, wonach die Menge Polymerisationsinhibitor 10 bis 1.000 ppm, bezogen auf die Summe (wässrige Phase + Inhibitor) beträgt.

## Claims

1. Process for the preparation of microencapsulated polymers by polymerization of monomer droplets which are contained in micro capsules suspended in an aqueous phase, characterized in that an aqueous phase contains at least one polymerization inhibitor.

2. Process according to Claim 1, in which the monomer droplet contains styrene and a crosslinking agent.

3. Process according to Claim 1, in which the polymerization inhibitor is an inorganic compound.

4. Process according to Claim 3, in which the polymerization inhibitor is chosen from the series consisting of nitrogen compounds, salts of phosphorous acid, sulphur-containing compounds and peroxy compounds.

5. Process according to Claim 1, in which the polymerization inhibitor is an organic compound.

6. Process according to Claim 5, in which the polymerization inhibitor is chosen from the series consisting of phenolic compounds, nitrogen compounds, unsaturated lactones, hydroxy-ketones and sulphur-containing compounds.

7. Process according to Claim 1, in which the amount of polymerization inhibitor is 10 to 1000 ppm, based on the sum (aqueous phase + inhibitor).

## Revendications

1. Procédé pour la préparation de polymères microencapsulés par polymérisation de gouttelettes de monomère qui sont contenues dans des microcapsules en suspension dans une phase aqueuse, caractérisé en ce que la phase aqueuse contient au moins un inhibiteur de polymérisation.

2. Procédé selon la revendication 1, dans lequel la gouttelette de monomère contient du styrène et de l'agent de réticulation.

3. Procédé selon la revendication 1, dans lequel l'inhibiteur de polymérisation est un composé inorganique.

4. Procédé selon la revendication 3, dans lequel l'inhibiteur de polymérisation est choisi dans le groupe comprenant des composés azotés, des sels de l'acide phosphoreux, des composés soufrés et des composés peroxydés.

5. Procédé selon la revendication 1, dans lequel l'inhibiteur de polymérisation est un composé organique.

6. Procédé selon la revendication 5, dans lequel l'inhibiteur de polymérisation est choisi dans le groupe comprenant des composés phénoliques, des composés azotés, des lactones insaturées, des hydroxycétones et des composés soufrés.

7. Procédé selon la revendication 1, dans lequel la quantité d'inhibiteur de polymérisation est de 10 à 1000 ppm, ramenée à la somme (phase aqueuse + inhibiteur).
